# EUROPEAN PATENT SPECIFICATION

(11) **EP 2 963 253 B1**
(45) Date of publication and mention of the grant of the patent: **11.04.2018**
(21) Application number: 15754634.2
(22) Date of filing: 09.02.2015
(51) Int. Cl.: F01K 23/10, F01K 27/00, F01K 23/16, F01K 23/06

(54) **POWER GENERATION SYSTEM AND METHOD FOR CONTROLLING POWER GENERATION SYSTEM**
STROMERZEUGUNGSSYSTEM UND VERFAHREN ZUM BETREIBEN DES STROMERZEUGUNGSSYSTEMS
SYSTÈME DE PRODUCTION DE PUISSANCE ET PROCÉDÉ DE COMMANDE DE SYSTÈME DE PRODUCTION DE PUISSANCE

(30) Priority: 27.02.2014 JP 2014037556
(43) Date of publication of application: 06.01.2016
(73) Proprietor: Mitsubishi Heavy Industries, Ltd., Tokyo 108-8215 (JP)
(72) Inventor: KANABOSHI, Takayuki, Nagasaki-shi Nagasaki 850-8610 (JP); NISHIKAWA, Yoshihiko, Nagasaki-shi Nagasaki 850-8610 (JP)
(74) Representative: Hoffmann Eitle
(86) International application number: PCT/JP2015/053555
(87) International publication number: WO 2015/129444

(56) References cited:
- EP-A1- 2 372 127
- EP-A1- 2 620 605
- EP-A2- 2 312 407
- JP-A- 2009 085 182
- JP-A- 2010 138 875
- JP-A- 2012 251 560
- JP-A- 2014 015 944

## Description

### Technical Field

The present invention relates to a power generation system in the power generation system provided with a steam turbine and a power turbine that use exhaust energy of an exhaust gas exhausted from a main engine such as a diesel engine for a ship or a diesel engine for an overland generator, and a control method of the power generation system.

### Background Art

A power generation system that extracts a part of exhaust gas of a diesel engine (main engine) for ship propulsion and guides the extracted exhaust gas to a power turbine to be used as a power generation output, and guides steam generated using the exhaust gas of the diesel engine to a steam turbine to be used as a power generation output is known. In such a power generation system, a governor is provided in the steam turbine to adjust the flow rate of fluid for driving the steam turbine.

PTL 1 discloses a technique in which a governor is provided in a steam turbine and a control signal generated by the governor is output to an adjustment valve to change an output of the steam turbine.

### Citation List

### Patent Literature

[PTL 1] Japanese Patent No. 5155977

EP 2 372 127 A1 discloses a control device for a waste heat recovery system which enables improvement in the responsiveness of the output control for a power turbine and a steam turbine with respect to sudden changes in the inboard load. The control device for a waste heat recovery system is equipped with: a power turbine that provides drive using engine exhaust gas and a steam turbine that provides drive using steam generated with an engine exhaust gas economizer, and is equipped with a power turbine control means which controls the output of the power turbine and a steam turbine control means which controls the output of the steam turbine, and both of which drive an electrical generator by means of the power turbine and the steam turbine. The power turbine control means is equipped with: a power turbine feedback control means which calculates a control valve operation amount based on the deviation between a power turbine target value and the actual power turbine output; and a power turbine feed-forward control means which extracts a control valve operation amount from a power turbine degree-of-opening command map wherein the relationship between the engine load, the power turbine output target value calculated from the engine load, and the control valve operation amount has been preset. The power turbine control means sets the degree of opening of the control valve by adding the operation amount from the feed-forward control means and the operation amount from the feedback control means.

EP 2 620 605 A1 discloses a control method and device for a turbine generator, which can reduce generated power without wasting fuel consumption of a diesel engine when the demand power decreases and thereby the generated power is brought into an excess state. A turbine generator configured by joining a power turbine which is driven with exhaust energy of exhaust gas emitted from a diesel engine as a power source and a steam turbine in series, wherein the diesel engine is provided with an exhaust turbosupercharger, extracts part of exhaust gas before the exhaust gas is supplied to the exhaust turbosupercharger, supplies the extracted exhaust gas to the power turbine after adjusting the supply amount thereof, supplies steam generated by an economizer to the steam turbine after adjusting the supply amount thereof, and when the demand power decreases and thereby the generated power is brought into an excess state, decreases the supply amount of the exhaust gas to the power turbine to minimize the output of the power turbine, and thereafter decreases the supply amount of the steam to the steam turbine.

### Summary of Invention

However, in PTL 1, output sharing of each device when a request output of an entire system is changed, that is, output sharing due to a change of consumed power is disclosed, but output sharing of each device when the request output is uniform, that is, output sharing due to a change of generated power is not disclosed.

In order to solve the above problems, an object of the invention is to provide a power generation system that controls output sharing for a stable operation due to a change of generated power, and a control method of the power generation system.

The present invention provides a power generation system as set out in Claim 1, and a control method of a power generation system as set out in Claim 7. Optional features are set out in the remaining claims.

### Brief Description of Drawings

Fig. 1 is a schematic configuration diagram illustrating a turbine generator system of a power generation system according to an embodiment of the invention.
Fig. 2 is a schematic configuration diagram illustrating a power generation system having the turbine generator system shown in Fig. 1.
Fig. 3 shows time charts illustrating changes of outputs of a generator and a power turbine, an opening degree of a governor valve, and a frequency, in a power generation system according to a reference example and in a power generation system according to a first embodiment of the invention.
Fig. 4 is a schematic diagram illustrating an instruction request interval in a power generation system control device according to a second embodiment of the invention.
Fig. 5 is a table illustrating the relationship between an operating state and an instruction request interval in a power generation system according to a reference example and a power generation system according to a second embodiment of the invention.
Fig. 6 is a graph illustrating the relationships between an instruction request interval, and responsiveness of a power management system (PMS) and an output change instruction of a steam turbine, according to the second embodiment of the invention.
Fig. 7 is a graph illustrating the relationship between an output change rate and an instruction request interval in a power turbine according to a third embodiment of the invention.

### Description of Embodiments

There is described in the following a power generation system including: a power turbine that is driven by exhaust gas generated by a main engine; a steam turbine that is driven by steam generated by the exhaust gas of the main engine; a generator that is connected to the power turbine and the steam turbine; a turbine control section that controls an output of the steam turbine; and a load sharing control section that controls load sharing of an output of the power turbine and the output of the steam turbine, in which when the power turbine is started, an increase instruction request for increasing an available power of the generator is performed.

The power turbine may be connected to a motor that drives the generator, that is, to the steam turbine, for example. As a configuration in which the power turbine is connected in this way, there is a configuration in which the generator, the steam turbine, and the power turbine are connected in series on one axis, a configuration in which the steam turbine and the power turbine are connected in parallel, or the like. In this case, as a governor, only a governor with respect to the steam turbine which is the main motor is provided. This is because the control is complicated when the governor is respectively provided with respect to the steam turbine and the power turbine.

Accordingly, when the output from the power turbine is changed, a power generation system control device controls the output of the steam turbine, that is, controls the governor.

Here, since the governor is not provided in the power turbine, the control of the power turbine corresponds to a control for merely opening and closing a valve. Accordingly, if there is a variation in the output of the power turbine, the output of the steam turbine is greatly changed to absorb the variation.

For example, when the power turbine is started, the output of the steam turbine is decreased to secure the output of the generator according to a speed droop characteristic under the control of the governor. Here, if the opening degree of the governor valve of the steam turbine reaches a predetermined lower limit value, since the power turbine is forcibly stopped by interlocking, the power turbine is stopped before starting as necessary.

Thus, in this configuration, the increase instruction request for increasing the available power of the generator is performed when the power turbine is started.

Accordingly, when the power turbine is started, the available power of the generator is increased by the available power increase instruction request from a turbine control section, and the output of the steam turbine acts in an output increase direction to cancel an output decrease according to the speed droop characteristic, so that the output decrease is alleviated. Thus, the opening degree of the governor valve of the steam turbine does not reach the predetermined lower limit value, and thus, the power turbine is not forcibly stopped. Thus, the output of the steam turbine is not greatly changed, and thus, it is possible to secure stable operation of the generator.

Further, the change of the output of the power turbine occurs due to a change in the load of the main engine, which becomes a disturbance to the generator. If the change of the output of the power turbine is constantly monitored, and the available power of the generator is changed when the generator is started to perform an output change control with respect to the steam turbine, this is effective in securing stable operation of the generator even when the load of the main engine is changed to cause a disturbance.

There is also described herein a power generation system including: a power turbine that is driven by exhaust gas generated by a main engine; a steam turbine driven by steam generated by the exhaust gas of the main engine; a generator that is connected to the power turbine and the steam turbine; a turbine control section that controls an output of the steam turbine; and a load sharing control section that controls load sharing of an output of the power turbine and the output of the steam turbine, in which when the power turbine is shut down, a decrease instruction request for decreasing an available power of the generator is performed.

The power turbine may be connected to a motor that drives the generator, that is, to the steam turbine, for example. Here, the generator, the steam turbine, and the power turbine may be connected in series on one axis. In this way, when the generator, the steam turbine, and the power turbine are connected on one axis, as a governor, only a governor with respect to the steam turbine which is the main motor is provided. This is because the control is complicated when the governor is respectively provided with respect to the steam turbine and the power turbine.

Accordingly, when an output from the power turbine is changed, the power generation system control device controls the output of the steam turbine, that is, controls the governor.

Here, since the governor is not provided in the power turbine, the control of the power turbine corresponds to a control for merely opening and closing a valve. Here, if there is a variation in the output of the power turbine, the output of the steam turbine is greatly changed to absorb the variation.

For example, when the power turbine is shut down, the output of the steam turbine is increased to secure the output of the generator according to the speed droop characteristic under the control of the governor. Here, the governor valve of the steam turbine reaches the fully opened state before the power turbine is stopped, and a state where the output is saturated is continued. Thus, it is not possible to further increase the output of the steam turbine, and thus, it is not possible to maintain the output of the generator.

Thus, in this configuration, when the power turbine is shut down, the decrease instruction request for decreasing the available power of the generator is performed.

Thus, when the power turbine is shut down, the available power of the generator is decreased by the available power decrease instruction request from the turbine control section, and the output of the steam turbine acts in a decrease direction to cancel an output increase according to the speed droop characteristic, so that the output increase is alleviated. Thus, a state where the governor valve of the steam turbine reaches the fully opened state and the output is saturated is not continued. Thus, it is possible to maintain the output of the generator, and to secure a stable operation of the generator.

Further, the change of the output of the power turbine occurs due to a change in the load of the main engine, which becomes a disturbance to the generator. If the change of the output of the power turbine is constantly monitored, and the available power of the generator is changed when the power turbine is shut down to perform the output change control with respect to the steam turbine, this is effective in securing a stable operation of the generator even when the load of the main engine is changed to cause a disturbance.

In this configuration, an instruction that is output to the turbine control section according to the increase instruction request or the decrease instruction request may be controlled as an opening degree of a governor valve that adjusts the amount of main steam supplied to the steam turbine.

If there is a variation in the output of the power turbine, the output of the steam turbine, that is, the amount of operation of the governor valve due to the governor is greatly changed to absorb the variation.

For example, when the power turbine is started, the opening degree of the governor valve controlled by the governor is decreased. Here, a predetermined lower limit value is set in the opening degree of the governor valve. If the opening degree reaches the lower limit value, the power turbine is forcibly stopped. Thus, the power turbine is stopped before starting as necessary.

On the other hand, when the power turbine is shut down, the opening degree of the governor valve controlled by the governor is increased. Here, the opening degree of the governor valve may reach the fully opened state before the power turbine is stopped. If the fully opened state is continued, it is not possible to further increase the output of the steam turbine, and thus, it is not possible to maintain the output of the generator.

Thus, in this configuration, an instruction that is output to the turbine control section according to the increase instruction request or the decrease instruction request is controlled as an opening degree of a governor valve that adjusts the amount of main steam supplied to the steam turbine.

Thus, when the power turbine is started, the available power of the generator is increased, and the opening degree of the governor valve is increased. Thus, the output of the steam turbine is increased to cancel the output decrease according to the speed droop characteristic, so that the output decrease is alleviated. Thus, the opening degree of the governor valve does not reach the lower limit value, and thus, the power turbine is not forcibly stopped. Accordingly, the amount of operation of the governor valve due to the governor is not greatly changed, and thus, it is possible to secure stable operation of the generator.

Further, when the power turbine is shut down, the available power of the generator is decreased, and the opening degree of the governor valve is decreased. Thus, the output of the steam turbine is decreased to cancel the output increase according to the speed droop characteristic, so that the output increase is alleviated.
Thus, the opening degree of the governor valve does not reach the fully opened state, and the fully opened state is not continued, and thus, it is possible to maintain the output of the generator. Accordingly, it is possible to secure a stable operation of the generator.

In this configuration, a value of an instruction request interval from the turbine control section to the load sharing control section may be set as a value suitable for operation states of the power turbine and the steam turbine.

According to this configuration, since the value of the instruction request interval from the turbine control section to the load sharing control section is set to a value suitable for the operation states of the power turbine and the steam turbine, it is possible to enhance responsiveness of the load sharing control section, and to obtain an output change instruction of the steam turbine, according to the operation states.

In this configuration, the value of the instruction request interval from the turbine control section to the load sharing control section may be set to be small when the power turbine is started or shut down, or when the
amount of steam from a low pressure steam source is increased or decreased.

According to this configuration, when the power turbine is started or shut down, or when the amount of steam from the low pressure steam source is increased or decreased, since the instruction request interval from the turbine control section to the load sharing control section is set to be small, it is possible to set the instruction request interval to match the operation states, for example, without matching an instruction request interval when there is a variation in the available power of the turbine generator when the power turbine or the low pressure steam source is normally operated (in cases other than the case where the power turbine or the low pressure steam source is started or stopped), for example. Thus, particularly, as the instruction request interval from the turbine control section to the load sharing control section is shortened, the responsiveness of the load sharing control section is enhanced. Thus, there is no concern that the opening degree of the governor valve becomes excessively small when the power turbine is started or when the amount of steam of the low pressure steam source is increased, or that the opening degree of the governor valve becomes excessively large when the power turbine is shut down or when the amount of the steam of the low pressure steam source is decreased. Accordingly, it is possible to secure stable operation of the generator.

Here, the power turbine has a large sharing ratio with respect to the output of the generator compared with steam supply from the low pressure steam source. Accordingly, the power turbine shortens the instruction request interval to further enhance responsiveness compared with the low pressure steam source.

In this configuration, the value of the instruction request interval from the turbine control section to the load sharing control section may be set to be small when the power turbine is started compared with when the power turbine is shut down, and when the amount of steam from the low pressure steam source is increased compared with when the amount of steam from the low pressure steam source is decreased.

When the power turbine is started, the output of the steam turbine is decreased according to the speed droop characteristic to match the output increase of the power turbine. Here, since the opening degree of the governor valve of the steam turbine has a predetermined lower limit value, if the opening degree reaches the lower limit value, the power turbine is forcibly stopped.

When the power turbine is shut down, the output of the steam turbine is increased according to the speed droop characteristic to match the output decrease of the power turbine. Here, if the governor valve of the steam turbine reaches a fully opened state, the load sharing control section moves load sharing to another diesel engine generator.

Accordingly, when the power turbine is started, or when the amount of steam of the low pressure steam source is increased, the instruction request interval from the turbine control section to the load sharing control section is shortened, compared with when the power turbine is shut down or when the amount of steam from the low pressure steam source is decreased, and thus, the responsiveness when the power turbine is started or when the amount of steam of the low pressure steam source is increased, that is, in high emergency, is enhanced. Accordingly, it is possible to prevent the power turbine from being forcibly stopped.

In this aspect, relationships between output change rates of the power turbine and the low pressure steam source, and the instruction request interval may be obtained in advance, and the instruction request interval optimal to the output change rates to be calculated may be obtained.

An optimal instruction request interval is present for each output change rate.

Thus, by respectively obtaining the relationships between the output change rates of the power turbine and the low pressure steam source, and the instruction request interval in advance, for example, in the case of the power turbine, it is possible to obtain an optimal instruction request interval from the output change rates calculated from the load of the main engine, the inlet pressure, temperature and exhaust gas flow rate of the power turbine, the opening degree of the exhaust gas flow rate adjusting valve, and the like. Thus, the governor valve of the steam turbine is adjusted to an optimal opening degree, and thus, it is possible to secure stable operation of the turbine generator.

There is also described herein a control method of a power generation system including the steps of: driving a power turbine by an exhaust gas generated by a main engine; driving a steam turbine by steam generated by the exhaust gas of the main engine; generating power by driving of the power turbine and the steam turbine; controlling an output of the steam turbine; and performing an increase instruction request for increasing an available power of power generation due to driving of the power turbine and the steam turbine when the power turbine is started.

When the power turbine is started, the increase instruction request for increasing the available power of the generator is performed.

Thus, when the power turbine is started, the available power of the generator is increased and the output of the steam turbine is increased to cancel the output decrease according to the speed droop characteristic, so that the output decrease is alleviated. Accordingly, the opening degree of the governor valve of the steam turbine does not reach the predetermined lower limit value, and thus, the power turbine is not forcibly stopped. Accordingly, the output of the steam turbine is not greatly changed, and thus, it is possible to secure stable operation of the generator.

In addition, there is described a control method of a control method of a power generation system comprising the steps of: driving a
power turbine by exhaust gas generated by a main engine; driving a steam turbine by steam generated by the exhaust gas of the main engine; generating power by driving of the power turbine and the steam turbine; controlling an output of the steam turbine; and performing a decrease instruction request for decreasing an available power of power generation due to driving of the power turbine and the steam turbine when the power turbine is shut down.

When the power turbine is shut down, the turbine control section performs the decrease instruction request for decreasing the available power of the turbine generator with respect to the load sharing control section.

Thus, when the power turbine is shut down, the available power of the generator is decreased and the output of the steam turbine is decreased to cancel the output increase according to the speed droop characteristic, so that the output increase is alleviated. Accordingly, it is possible to prevent the occurrence of a state where the governor valve of the steam turbine reaches a fully opened state or the fully opened state is continued. Accordingly, it is possible to maintain the output of the generator, and to secure stable operation of the generator.

According to the embodiments of the invention described herein, an available power of a generator is increased or decreased according to an output increase or decrease due to a power turbine or the like, and thus, it is possible to suppress a variation in an output change of a steam turbine, to thereby secure stable operation.

Hereinafter, an embodiment of a power generation system and a control method of a power generation system according to the invention will be described with reference to the accompanying drawings.

### [First embodiment]

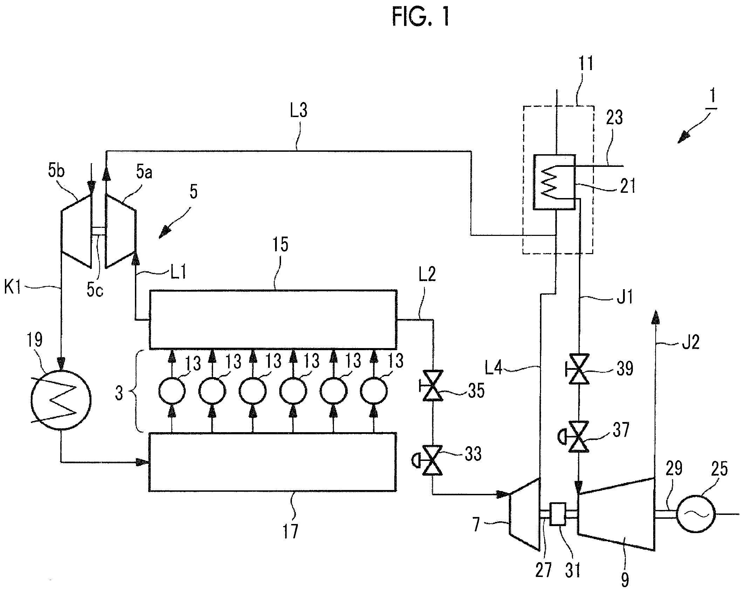

Hereinafter, a first embodiment of the invention
will be described with reference to Fig. 1.

Fig. 1 shows a schematic configuration of a turbine generator system of a power generation system according to the embodiment. In this embodiment, a diesel engine 3 for ship propulsion is used as a main engine.

A turbine generator system 1 includes the engine (main engine) 3, a supercharger 5 that is driven by exhaust gas of the engine 3, a power turbine (gas turbine) 7 that is driven by the exhaust gas of the engine 3 extracted from an upstream side of the supercharger 5, an exhaust gas economizer (exhaust gas boiler) 11 that generates steam by using the exhaust gas of the engine 3, and a steam turbine 9 that is driven by the steam generated by the exhaust gas economizer 11.

An output from the engine 3 is directly or indirectly connected to a screw propeller through a propeller shaft. Further, an exhaust port of a cylinder portion 13 of each cylinder of the engine 3 is connected to an exhaust manifold 15 which is an exhaust gas collecting pipe, and the exhaust manifold 15 is connected to an inlet side of a turbine portion 5a of the supercharger 5 through a first exhaust tube L1. Further, the exhaust manifold 15 is connected to an inlet side of the power turbine 7 through a second exhaust tube L2 (steam extracting passage), and a part of the exhaust gas is extracted before being supplied to the supercharger 5 to then be supplied to the power turbine 7.

On the other hand, a gas supply port of each cylinder portion 13 is connected to a gas supply manifold 17, and the gas supply manifold 17 is connected to a compressor portion 5b of the supercharger 5 through a gas supply tube K1. Further, an air cooler (intercooler) 19 is provided in the gas supply tube K1.

The supercharger 5 includes the turbine portion 5a, the compressor portion 5b, and a rotating shaft 5c that connects the turbine portion 5a and the compressor portion 5b.

The power turbine 7 is rotationally driven by exhaust gas extracted from the exhaust manifold 15 through the second exhaust tube L2, and the steam turbine 9 is supplied with steam generated by the exhaust gas economizer 11 to be rotationally driven.

The exhaust gas economizer 11 is supplied with exhaust gas discharged from an output port of the turbine portion 5a of the supercharger 5 through a third exhaust gas tube L3 and exhaust gas discharged from an output port of the power turbine 7 through a fourth exhaust gas tube L4, and evaporates water supplied through a water supply tube 23 using heat of the exhaust gas to generate steam by a heat exchanger 21. Further, the steam generated by the exhaust gas economizer 11 is introduced to the steam turbine 9 through a first steam tube J1, and the steam after processing in the steam turbine 9 is discharged through a second steam tube J2 and is guided to a condenser (not shown).

The power turbine 7 and the steam turbine 9 are coupled in series to drive a turbine generator 25. A rotation shaft 29 of the steam turbine 9 is connected to the turbine generator 25 through a speed reducer and a coupling (which are not shown), and a rotation shaft 27 of the power turbine 7 is connected to the rotation shaft 29 of the steam turbine 9 through a speed reducer (not shown) and a clutch 31. A clutch detachably mounted with a predetermined number of revolutions is used as the clutch 31, and a synchro self shifting (SSS) clutch is preferably used, for example. In this embodiment, the power turbine 7 and the steam turbine 9 are coupled in series to drive the turbine generator 25, but the power turbine 7 and the steam turbine 9 may be coupled in parallel to drive the turbine generator 25 through a speed reducer using each rotational power.

Further, an exhaust gas flow rate adjusting valve 33 that controls the flow rate of gas introduced to the power turbine 7 and an emergency shutoff valve 35 that shuts off the supply of steam to the power turbine 7 in an emergency are provided in the second exhaust tube L2.

Further, a governor valve (steam flow rate adjusting valve) 37 that controls the flow rate of steam introduced to the steam turbine 9 and an emergency shutoff valve 39 that shuts off the supply of steam to the steam turbine 9 in an emergency are provided in the first steam tube J1. An opening degree of the governor valve 37 is controlled by a governor 59 of a power generation system control device 43 (which will be described later).

As described above, the turbine generator system 1 is driven using exhaust energy of the exhaust gas (combustion gas) of the engine 3 as power, and forms an exhaust energy recovery device.

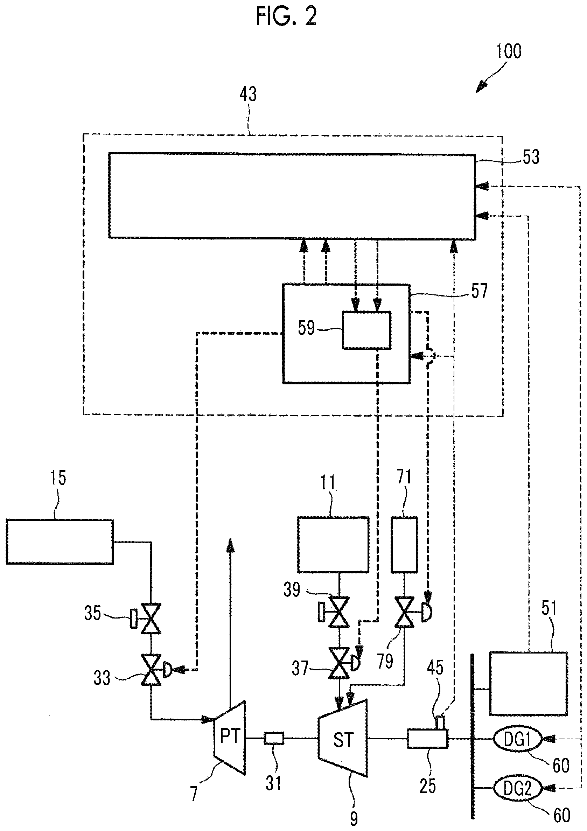

Fig. 2 shows a schematic configuration of a power generation system having the turbine generator system shown in Fig. 1.

The power generation system 100 includes plural (two in this embodiment) diesel engine generators (generators) 60 that are separately provided in a ship, in addition to the turbine generator system 1 (see Fig. 1).

The power generation system control device 43 receives an input of a signal from a power sensor 45 that detects an output power of the turbine generator 25. Further, the power generation system control device 43 receives inputs of an output signal from the diesel engine generator 60 and a signal from an inboard consumed power sensor 51 that detects inboard consumed power.

Further, the power generation system control device 43 includes a power management system (PMS) (load sharing control section) 53, a turbine control panel (TCP) (turbine control section) 57, and a governor section (not shown) for the diesel engine generator 60. In addition, the TCP 57 includes the governor 59. The governor 59 controls a rotation speed of the steam turbine 9. That is, the governor 59 controls the output of the steam turbine 9 by outputting the opening degree of the adjusting valve 37 depending on the speed setting of a rotation speed instructed by the PMS 53 to the governor valve 37.

An instruction signal of an output depending on a load factor set from the load sharing control section 53 is output to the TCP 57 and the governor section for the diesel engine generator 60, respectively.

A control signal is output to the governor 59 of the TCP 57 according to an output load ratio of the steam turbine 9 instructed by the PMS 53, and the governor 59 outputs the opening degree of the governor valve 37 according to the control signal to the governor valve 37. Thus, the opening degree of the governor valve 37 is controlled, so that the flow rate of steam supplied to the steam turbine 9 is controlled.

Here, the power turbine 7, the steam turbine 9, and the turbine generator 25 are coupled in series on one axis. When these components are coupled in series on one axis in this way, only the governor 5 related to the steam turbine 9 which is a main motor is provided as the governor. This is because it is difficult to perform control when two or more governors are provided on one axis.

Accordingly, when an output from the power turbine 7 is changed, the power generation system control device 43 controls the adjusting valve 37 according to the output of the steam turbine 9, that is, by the governor 59.

Here, since the governor is not provided in the power turbine 7, the control of the power turbine 7 becomes only a control for opening and closing the gas flow rate adjusting valve 33, and a fully opened state is constantly maintained during normal operation. Here, the opening degree of the exhaust gas adjusting valve 33 is gradually increased or is gradually decreased, only when the power turbine 7 is started or shut down. Accordingly, if there is a variation in the output of the power turbine 7, the control of the opening degree of the governor valve 37 due to the output of the steam turbine 9, that is, the governor 59 is changed to absorb the variation.

Here, the starting of the power turbine 7 refers to a state where the output of the power turbine 7 is increased from 0 which is a starting point, and the shutdown of the power turbine refers to a state where the output of the power turbine 7 is decreased so that the output becomes 0.

Further, mixed steam from a low pressure steam source 71 is supplied to an intermediate stage of the steam turbine 9. An adjusting valve 79 that controls the amount of mixed steam introduced to the steam turbine 9 is provided on a supply line of the mixed steam. The opening degree of the adjusting valve 79 is increased or is decreased according to an increase and decrease in the amount of steam generated in the low pressure steam source 71. Accordingly, if there is a variation in the amount of the supplied mixed steam, the control of the opening degree of the governor valve 37 due to the output of the steam turbine 9, that is, the governor 59 is changed to absorb the variation. A low pressure stage (see Fig. 1) of the exhaust gas economizer 11 may be used as the low pressure steam source.

As described above, a control signal depending on the output sharing ratio is output to the governor 59 that operates the governor valve 37 from the PMS 53.

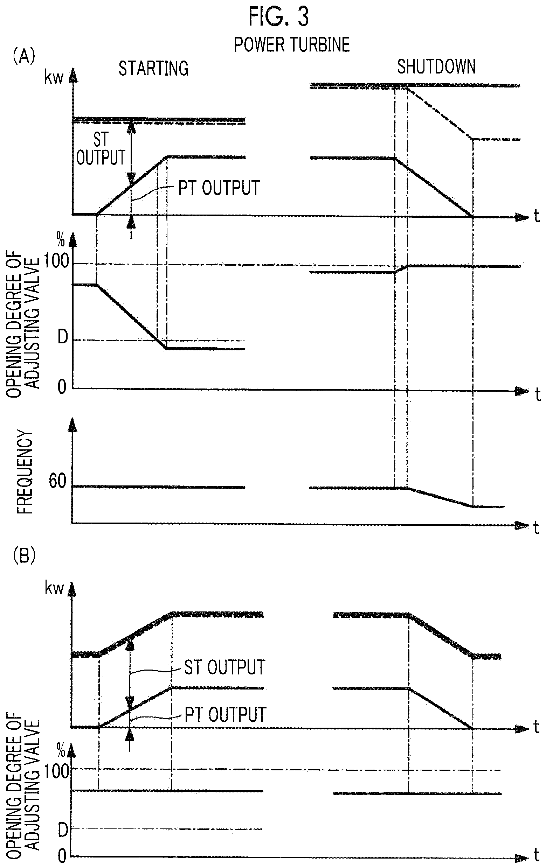

Fig. 3 shows time charts illustrating changes of outputs of a generator and a power turbine, an opening degree of a governor valve, and a frequency, in a power generation system which is a reference example and in a power generation system according to a first embodiment of the invention.

A transverse axis in the time charts represents time, and a longitudinal axis represents outputs of the generator 25 and the power turbine 7, and the opening degree and frequency of the governor valve 37. Fig. 3(A) is a time chart of a power generation system 100 which is a reference example, and Fig. 3(B) is a time chart of a power generation system 100 according to an embodiment of the invention. Further, in a time chart of Fig. 3 in which the longitudinal axis represents the outputs, a solid line represents the output of the power turbine 7, a thick solid line represents an available power of the turbine generator 25, and a broken line represents the output of the turbine generator 25.

Here, the available power refers to an upper limit value of the output of the power turbine 7 and the output of the steam turbine 9, which is defined as a value for adjusting load sharing of the turbine generator 25 and another diesel engine generator 60 in a range without exceeding the upper limit value.

An operation when the power turbine 7 is started in the power generation system 100 which is the reference example will be described with reference to Fig. 3(A).

Since the power turbine 7 of the power generation system 100 is not started, its output is 0. Further, the steam turbine 9 shares the entire load. If the power turbine 7 begins starting, the output of the power turbine 7 is increased. If the output is increased, the frequency is changed, and instantly, the governor 59 performs an output decrease control for reducing the opening degree of the governor valve 37 with respect to the governor valve 37 in order to absorb the variation of the output according to a speed droop characteristic.

Here, a predetermined lower limit value D is set to the opening degree of the governor valve 37. The output of the steam turbine 9 is decreased to absorb the variation of the output as the output of the power turbine 7 is increased, and thus, if the opening degree of the governor valve 37 is excessively decreased, it is not possible to control the speed of the governor valve 37 in a closing direction. Accordingly, there is a concern that overspeed of the steam turbine 9 occurs. Thus, by providing the predetermined lower limit value D in the opening degree of the governor valve 37 operated by the governor 59 to forcibly shut down (or stop) the power turbine 7 or the low pressure steam source 71, a controllable range of the governor 59 is set.

As the power turbine 7 continues the starting to increase its output and the opening degree of the governor valve 37 is decreased, the opening degree may reach the predetermined lower limit value D before the power turbine 7 is started. If the opening degree of the governor valve 37 reaches the predetermined lower limit value D (if it is detected that the opening degree is equal to or lower than the lower limit value D by an opening degree signal, a limit switch or the like), the power turbine 7 is forcibly stopped by a power turbine protection device (not shown). Accordingly, when the power turbine 7 having a particularly large output value is started, the governor 59 reduces the opening degree of the governor valve 37 to reach the predetermined lower limit value D, to thereby forcibly shut down the power turbine 7, and thus, the power turbine 7 cannot be started to enter a blackout state, or a state where stable operation cannot be performed.

Further, for example, when the steam turbine 9 is operated in a state where the opening degree of the adjusting valve 3 is low with a partial load, instead of a maximum output in the load of the engine 3, if the power turbine 7 is started, as the opening degree of the governor valve 37 becomes lower at the time of the starting, the time until the opening degree reaches the predetermined lower limit value D becomes shorter. Further, as the ratio of the output of the power turbine 7 with respect to the output of the steam turbine 9 becomes larger, the time until the opening degree reaches the predetermined lower limit value D becomes shorter.

On the other hand, a starting operation of the power turbine 7 in the power generation system 100 according to an embodiment of the invention will be described with reference to Fig. 3(B).

Since the power turbine 7 of the power generation system 100 is not started, its output is 0. Further, the steam turbine 9 shares the entire load. If the power turbine 7 is started, the output of the power turbine 7 is increased. If the output is increased, the frequency is changed, and instantly, the governor 59 performs the decrease control for reducing the opening degree of the governor valve 37 with respect to the governor valve 37 in order to absorb the variation of the output according to the speed droop characteristic.

At the same time, if the increase of the output of the power turbine 7 is detected, the TCP 57 sends an instruction request to the PMS 53, and increases an available power of the turbine generator 25 to be given to the PMS 53. The PMS 53 outputs an output increase instruction to the governor 59 of the TCP 57. The governor 59 that receives the output increase instruction increases the rotation speed setting of the steam turbine 9 to be operated in an output increase direction, and thus, the opening degree of the governor valve 37 is subjected to an increase control, and the increase control acts to cancel the decrease control for reducing the opening degree according to the speed droop characteristic. Thus, the decrease of the opening degree of the governor valve 37 is canceled or alleviated.

Accordingly, the opening degree of the governor valve 37 does not reach the predetermined lower limit value D without being rapidly decreased. Accordingly, since the power turbine 7 is not forcibly stopped, the power generation system 100 is stably operated.

Next, a shutdown operation of the power turbine 7 in the power generation system 100 which is the reference example will be described with reference to Fig. 3(A).

The power turbine 7 and the steam turbine 9 in the power generation system 100 share the output. If the output of the power turbine 7 is decreased, the frequency is changed, and instantly, the governor 59 performs an increase control for increasing the opening degree of the governor valve 37 with respect to the governor valve 37 in order to absorb the variation of the output according to the speed droop characteristic.

As the output of the power turbine 7 is decreased and the opening degree of the governor valve 37 is increased, the opening degree of the governor valve 37 may reach a fully opened state (that is, an opening degree of 100%) before the power turbine 7 is stopped. If the opening degree of the governor valve 37 reaches the fully opened state, it is not possible to further increase the output of the steam turbine 9, and the requested output of the turbine generator 25 is not output, and thus, a state where the output of the turbine generator 25 cannot be maintained occurs. In this case, at a time point when the opening degree of the governor valve 37 reaches the fully opened state, the PMS 53 performs cooperation control so that each of the other diesel engine generators 60 shares the lacking output, and performs a cooperative operation.

On the other hand, a shutdown operation of the power turbine 7 in the power generation system 100 according to the embodiment of the invention will be described with reference to Fig. 3(B).

The power turbine 7 and the steam turbine 9 of the power generation system 100 share the output. When the power turbine 7 is stopped, the output of the power turbine 7 is decreased. If the output is decreased, the frequency is changed, and instantly, the governor 59 performs the increase control for increasing the opening degree of the governor valve 37 with respect to the governor valve 37 in order to absorb the variation of the output according to the speed droop characteristic.

At the same time, if the decrease of the output of the power turbine 7 is detected, the TCP 57 gives an instruction request to the PMS 53, and reduces an available power of the turbine generator 25 to be given to the PMS 53. The PMS 53 outputs an output decrease instruction to the governor 59 of the TCP 57. The governor 59 that receives the output decrease instruction decreases rotation speed setting of the steam turbine 9 to be operated in an output decrease direction, and thus, the opening degree of the governor valve 37 is subjected to a decrease control, and the decrease control acts to cancel the increase control for increasing the opening degree according to the speed droop characteristic. Thus, the increase of the opening degree of the governor valve 37 is canceled or alleviated. Further, at a time point when the instruction request from the TCP 57 is received, the PMS 53 performs cooperation control so that each of the other diesel engine generators 60 shares the lacking output, and performs a cooperative operation.

Accordingly, the opening degree of the governor valve 37 does not reach the fully opened state and does not maintain the fully opened state, and the cooperative operation is performed at the same time as when the frequency is changed. Thus, the power generation system 100 is stably operated.

Further, the output of the power turbine 7 may rapidly decrease due to the stopping of the power turbine 7 due to interlocking or the like. In this case, similarly, the same process is performed.

As described above, according to the power generation system and the control method of a power generation system according to the embodiment of the invention, when the power turbine 7 is started, the available power of the turbine generator 25 is increased, and the output of the steam turbine 9 acts in the increase direction to cancel the output decrease according to the speed droop characteristic, so that the output decrease is alleviated. Thus, the opening degree of the governor valve 37 does not reach the predetermined lower limit value D, and thus, the power turbine 7 is not forcibly stopped due to interlocking. Accordingly, the output of the steam turbine 9 is not greatly changed, and thus, it is possible to secure stable operation of the turbine generator 25.

Further, when the power turbine 7 is shut down, the available power of the turbine generator 25 is decreased, and the output of the steam turbine 9 acts in the decrease direction to cancel the output increase according to the speed droop characteristic, so that the output increase is alleviated. Accordingly, a state where the governor valve 37 of the steam turbine 9 reaches the fully opened state and the output is saturated is not continued. Accordingly, it is possible to maintain the output of the turbine generator 25, and to secure stable operation of the turbine generator 25.

Further, the change of the output of the power turbine 7 occurs due to a change in the load of the engine 3, which becomes a disturbance to the turbine generator 25. If the change of the output of the power turbine 7 is constantly monitored, and the available power of the turbine generator 25 is changed when the power turbine 7 is started or shut down to perform the output change control with respect to the steam turbine 9, this is effective in securing stable operation of the turbine generator 25 even when the load of the engine 3 is changed to cause a disturbance.

Further, when the power turbine 7 is started, the available power of the turbine generator 25 is increased, and the opening degree of the governor valve 37 is increased. Thus, the output of the steam turbine 9 is increased to cancel the output decrease according to the speed droop characteristic, so that the output decrease is alleviated. Accordingly, the opening degree of the governor valve 37 does not reach the predetermined lower limit value D, and thus, the power turbine 7 is not forcibly stopped. Accordingly, the operation amount of the governor valve 37 due to the governor 59 is not greatly changed, and thus, it is possible to secure stable operation of the turbine generator 25.

Further, when the power turbine 7 is shut down, the available power of the turbine generator 25 is decreased, and the opening degree of the governor valve 37 is decreased. Thus, the output of the steam turbine 9 is decreased to cancel the output increase according to the speed droop characteristic, so that the output increase is alleviated. Accordingly, it is possible to prevent the occurrence of a state where the governor valve 37 reaches the fully opened state or the fully opened state is continued. Accordingly, it is possible to maintain the output of the turbine generator 25, and to secure stable operation of the turbine generator 25.

### [Second embodiment]

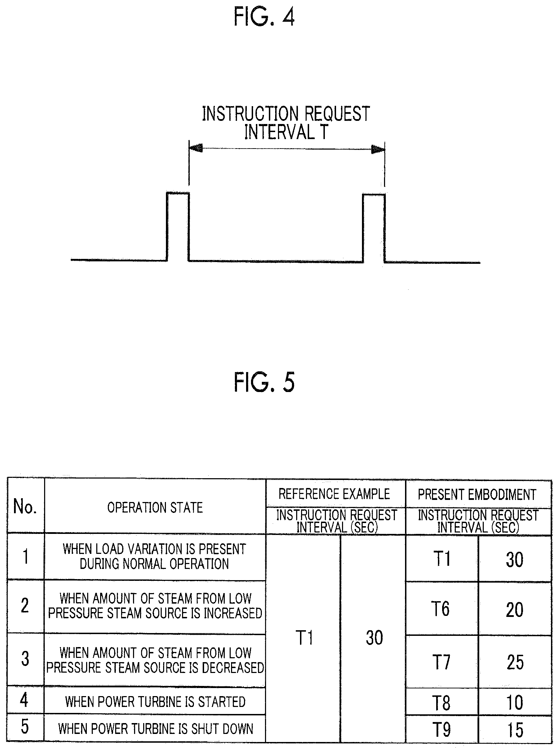

Hereinafter, a second embodiment of the invention will be described with reference to Figs. 4 to 6.

In the above-described first embodiment, the load of the turbine generator 25, the governor 59 and the governor valve 37 are controlled according to the output change of the power turbine 7, but in this embodiment, an instruction request interval from the TCP 57 to the PMS 53 is changed according to the output change of the power turbine 7, in addition to the configuration of the first embodiment. Since other configurations are the same as in the first embodiment, description thereof will not be repeated.

Fig. 4 shows an example of an instruction request interval in a power generation system control device according to the second embodiment of the invention.

The TCP 57 performs an available power change request of the turbine generator 25, that is, an output change request of the steam turbine 9 with respect to the PMS 53. Accordingly, the PMS 53 outputs the output change instruction to the governor 59, and the governor 59 changes the rotational speed setting of the steam turbine 9 to control the governor valve 37 according to the opening degree based on the changed rotational speed setting. Thus, the amount of main steam supplied to the steam turbine 9 is changed, and thus, the output of the steam turbine 9 is changed.

Here, the output change request with respect to the PMS 53 from the TCP 57, that is, the instruction request interval (timing) is used as an instruction request interval, and its value is set to T. As shown in Fig. 4, the instruction request interval T represents a time from when one instruction request is finished to a time when the next instruction request is finished.

If the value of the instruction request interval T is small, the instruction request from the TCP 57 is made with a short interval, and thus, responsiveness of the PMS 53 is enhanced.

Fig. 5 shows a table illustrating the relationship between an operating state and an instruction request interval in a power generation system which is a reference example and a power generation system according to the second embodiment of the invention.

First, the case of the power generation system 100 which is the reference example will be described.

In the power generation system 100 which is the reference example, during normal operation, that is, when the low pressure steam source 71 and the power turbine 7 are in an operating state, which is not in the starting state and in the stoppage state, the instruction request interval T when there is a load variation in the turbine generator 25 or a load variation in the engine 3 is set to T1, and its time is set to 30 seconds, for example. Further, when the amount of steam from the low pressure steam source 71 is increased or decreased, the instruction request interval T when the power turbine 7 is started and shut down is also set to T1. In this case, when the amount of steam from the low pressure steam source 71 is increased and the power turbine 7 is started, since the instruction request interval is excessively long, the responsiveness of the PMS 53 deteriorates, and the control frequency of the governor valve 37 due to the governor 59 drops. Thus, the opening degree of the governor valve 37 may become excessively small as in the graph shown in Fig. 3(A) when the power turbine 7 is started. Further, when the amount of steam from the low pressure steam source 71 is decreased and the power turbine 7 is shut down, similarly, since the instruction request interval becomes excessively long, the responsiveness of the PMS 53 deteriorates, and the control frequency of the governor valve 37 due to the governor 59 drops. Thus, the opening degree of the governor valve 37 may become excessively large as in the graph shown in Fig. 3 (A) when the power turbine 7 is shut down. Accordingly, in the cases other than the normal state, a state where the operation of the turbine generator 25 is not stable may occur.

On the other hand, the case of the power generation system 100 according to the second embodiment will be described.

In the power generation system 100 of this embodiment, in the normal state, the instruction request interval T when there is a load variation in the turbine generator 25 or a load variation in the engine 3 is set to T1, and its time is set to 30 seconds, for example.

Further, the instruction request interval T when the amount of steam from the low pressure steam source 71 is increased is set to T6, the instruction request interval T when the amount of steam from the low pressure steam source 71 is decreased is set to T7, the instruction request interval T when the power turbine 7 is started is set to T8, and the instruction request interval T when the power turbine 7 is shut down is set to T9, respectively. Further, the time of T6 is set to 20 seconds, the time of T7 is set to 25 seconds, the time of T8 is set to 10 seconds, and the time of T9 is set to 15 seconds. That is, these instruction request intervals are set to be shorter than T1, respectively. Here, the reason why the values of T6 to T9 are set to different values instead of a constant value is as follows.

The power turbine 7 has a large sharing ratio with respect to the output of the turbine generator 25 compared with the steam supply from the low pressure steam source 71. The sharing ratio of the steam turbine 9, the power turbine 7, and the low pressure steam source 71 is about 5:4:1, for example. Accordingly, since the output change in the power turbine 7 is larger than the output change of low pressure steam source, it is necessary to enhance the responsiveness of the PMS 53. Accordingly, the instruction request intervals T8 and T9 with respect to the output change in the power turbine 7 are set to be values smaller than the instruction request intervals T6 and T7 with respect to the output change in the low pressure steam source 71.

Further, when the amount of steam from the low pressure steam source 71 is increased, and when the power turbine 7 is started, since the opening degree of the governor valve 37 becomes small so as to be close to the predetermined lower limit value D. If the opening degree of the governor valve 37 reaches the predetermined lower limit value D, there is a concern that the power turbine 7 or the low pressure steam source 71 is stopped so that the power generation system 100 is stopped. Thus, it is necessary to enhance the responsiveness of the PMS 53.

When the amount of steam from the low pressure steam source 71 is decreased, and when the power turbine 7 is shut down, the opening degree of the governor valve 37 becomes large so as to be close to a fully opened state. If the opening degree of the governor valve 37 reaches the fully opened state, the output of the turbine generator 25 cannot be maintained, but a cooperative operation is performed by the PMS 53. Thus, each of the other diesel engine generators 60 shares the lacking output, and thus, it is possible to secure stable operation of the turbine generator 25.

Accordingly, when the amount of steam from the low pressure steam source 71 is decreased and when the amount of steam from the low pressure steam source 71 is increased, that is, in higher emergency compared with when the power turbine 7 is shut down, it is necessary to enhance the responsiveness of the PMS 53 when the power turbine 7 is started. Accordingly, the instruction request intervals T6 and T8 with respect to the output change when the amount of steam from the low pressure steam source 71 is increased and when the power turbine 7 is started are set to values smaller than the instruction request intervals T7 and T9 with respect to the output change when the amount of steam from the low pressure steam source 71 is decreased and when the power turbine 7 is shut down.

As described above, by setting the instruction request intervals T to match the respective states, it is possible to optimize the instruction request interval T.

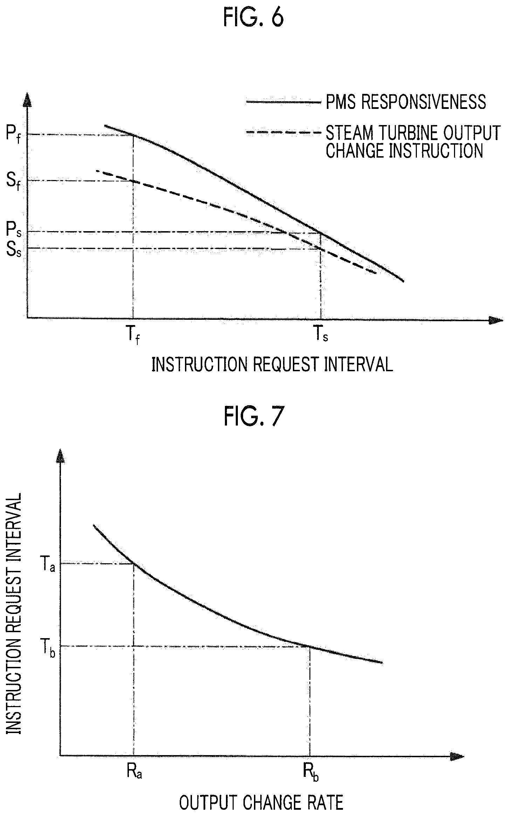

Fig. 6 is a graph illustrating the relationships between an instruction request interval, and responsiveness of the PMS and an output change instruction of a steam turbine, according to the second embodiment of the invention. In the graph shown in Fig. 6, a longitudinal axis represents responsiveness, a transverse axis represents pulse interval, a solid line represents PMS instruction, and a broken line represents steam turbine output change instruction. If the pulse interval is lengthened, the PMS instruction and the steam turbine output change instruction have low responsiveness.

As described above, when the instruction request interval T is short like Tf, responsiveness Pf of the PMS 53 is enhanced. Contrarily, when the instruction request interval T is long like Ts, responsiveness Ps of the PMS 53 is reduced. When the responsiveness is high like Pf, the PMS 53 performs quick control. On the other hand, when the responsiveness is low like Ps, the PMS 53 performs slow control.

Further, when an output change instruction Sf with respect to the steam turbine 9 is a frequent and quick instruction, the instruction request interval T becomes short like Tf. On the other hand, when it is not necessary that the output change instruction Ss of the steam turbine 9 is a quick instruction like Sf, the instruction request interval T becomes long like Ts. That is, a frequent and quick instruction like Sf is necessary when the power turbine 7 is started, when the amount of steam from the low pressure steam source 71 is increased, when the amount of steam from the low pressure steam source 71 is decreased, or when the power turbine 7 is shut down, for example. Here, the value of the instruction request interval T becomes small. This is because as a response with respect to the control of the steam turbine 9 is quickly performed, repetition of the starting and stoppage of the power turbine 7 or the like does not occur. On the other hand, during the normal operation or the like, a quick instruction like Ss is not necessary.

As described above, according to the power generation system and the control method of a power generation system according to this embodiment, since the value of the instruction request interval from the TCP 57 to the PMS 53 is set to a value suitable for the operation state of the turbine generator 25, it is possible to enhance responsiveness of the PMS 53, and to obtain an output change instruction of the steam turbine 9, according to the operation state.

Further, when the power turbine 7 is started or shut down, and when the amount of steam from the low pressure steam source 71 is increased or decreased, since the value of the instruction request interval from the TCP 57 to the PMS 53 is set to be small, it is possible to set the instruction request interval to match the operation state, for example, without matching an instruction request interval when there is a variation in the available power of the turbine generator 25 when the power turbine 7 or the low pressure steam source 71 is normally operated (in cases other than the case where the power turbine 7 or the low pressure steam source 71 is started or stopped), for example. Thus, particularly, as an instruction request interval from the TCP 57 to the PMS 53 is shortened, the responsiveness of the PMS 53 is enhanced. Thus, there is no concern that the opening degree of the governor valve 37 becomes excessively small when the power turbine 7 is started and when the amount of steam from the low pressure steam source 71 is increased, or that the opening degree of the governor valve 37 becomes excessively large when the power turbine 7 is shut down and when the amount of steam from the low pressure steam source 71 is decreased. Thus, it is possible to secure stable operation of the turbine generator 25.

Here, the power turbine 7 shares a large load compared with the steam supply from the low pressure steam source 71. Accordingly, the power turbine 7 has a short instruction request interval compared with the low pressure steam source 71 in order to improve the responsiveness.

Further, when the power turbine 7 is started, the output of the steam turbine 9 is decreased according to the speed droop characteristic as the output of the power turbine 7 is increased. Here, since the opening degree of the governor valve 37 of the steam turbine 9 has the predetermined lower limit value D, if the opening degree reaches the lower limit value D, the power turbine 7 is forcibly stopped.

When the power turbine 7 is shut down, the output of the steam turbine 9 is increased according to the speed droop characteristic as the output of the power turbine 7 is decreased. If the governor valve 37 of the steam turbine 9 reaches the fully opened state, the PMS 53 moves the load sharing to another diesel engine generator 60.

Accordingly, when the power turbine 7 is started or when the amount of steam from the low pressure steam source 71 is increased, the instruction request interval from the TCP 57 to the PMS 53 is shortened, compared with when the power turbine 7 is shut down or when the amount of steam from the low pressure steam source 71 is decreased, and thus, the responsiveness when the power turbine 7 is started or when the amount of steam of the low pressure steam source 71 is increased, that is, in high emergency, is enhanced.

### [Third embodiment]

Hereinafter, a third embodiment of the invention will be described with reference to Fig. 7.

In the above-described second embodiment, a fixed value is set to the instruction request interval T, but in this embodiment, an optimal instruction request interval is derived from the relationship between an output change rate and an instruction request interval. Since other configurations are the same as in the second embodiment, description thereof will not be repeated.

Fig. 7 is a graph illustrating the relationship between an output change rate and an instruction request interval in a power turbine according to this embodiment.

The relationship between the output change rate and the instruction request interval in the power turbine 7 is set in advance. Thus, for example, a graph as shown in Fig. 7 is obtained. A transverse axis in the graph represents the output change rate, and a longitudinal axis represents the instruction request interval. If the output change rate is increased, the instruction request interval is decreased.

In the case of the power turbine 7, by calculating an output change rate Ra obtained from a load of the engine 3, an inlet pressure, a temperature, and an exhaust gas flow rate of the power turbine 7, an opening degree of the exhaust gas flow rate adjusting valve 33, and the like, and by applying the calculated output change rate Ra to the graph shown in Fig. 7, it is possible to obtain an optimal instruction request interval Ta.

Similarly, the relationship between the output change rate of the low pressure steam source 71 and the instruction request interval is set. In this case, by calculating an output change rate from a pressure, a temperature, and a flow rate of the low pressure steam source 71, an opening degree of the adjusting valve 79, and the like, and by applying the calculated output change rate, it is possible to obtain an optimal instruction request interval.

As described above, by respectively obtaining the relationships between the output change rates of the steam of the power turbine 7 and the low pressure steam source 71 and the instruction request interval in advance, for example, in the case of the power turbine 7, it is possible to obtain an optimal instruction request interval from the output change rate calculated from the load of the engine 3, the inlet pressure, temperature, and exhaust gas flow rate of the power turbine 7, the opening degree of the exhaust gas flow rate adjusting valve 33, and the like. Thus, the governor valve 37 of the steam turbine 9 is adjusted to an optimal opening degree, and thus, it is possible to secure stable operation of the turbine generator 25.

Hereinbefore, the embodiments of the invention have been described with reference to the accompanying drawings, but specific configurations are not limited thereto, and may include design modifications in a range departing from the scope of the invention, which is defined by the claims.

For example, in the above-described embodiments, the inboard power system 100 is shown, but the invention may be applied to a land power generation system 100. Reference Signs List
- 1: TURBINE GENERATOR SYSTEM
- 3: ENGINE (MAIN ENGINE)
- 5: SUPERCHARGER
- 7: POWER TURBINE
- 9: STEAM TURBINE
- 11: EXHAUST GAS ECONOMIZER
- 25: TURBINE GENERATOR (GENERATOR)
- 37: GOVERNOR VALVE
- 43: POWER GENERATION SYSTEM CONTROL DEVICE
- 53: PMS (LOAD SHARING CONTROL SECTION)
- 57: TCP (TURBINE CONTROL SECTION)
- 60: DIESEL ENGINE GENERATOR (GENERATOR)
- 71: LOW PRESSURE STEAM SOURCE
- 100: POWER GENERATION SYSTEM

## Claims

1. A power generation system (100) comprising:
a power turbine (7) arranged to be driven by exhaust gas generated by a main engine (3);
a steam turbine (9) arranged to be driven by steam generated by the exhaust gas of the main engine (3);
a generator (25) that is connected to the power turbine (7) and the steam turbine (9);
a turbine control section (57) arranged to control an output of the steam turbine (9); and
a load sharing control section (53) arranged to control load sharing of an output of the power turbine (7) and the output of the steam turbine (9),
the power generation system (100) being arranged such that, when the power turbine (7) is started, an increase instruction request for increasing an available power of the generator (25) is performed or such that, when the power turbine (7) is shut down, a decrease instruction request for decreasing the available power of the generator (25) is performed, the available power of the generator (25) being an upper limit value of the output of the power turbine (7) and the output of the steam turbine (9).

2. The power generation system (100) according to claim 1, arranged such that an instruction that is output to the turbine control section (57) according to the increase instruction request or the decrease instruction request is controlled as an opening degree of a governor valve (37) that is arranged to adjust the amount of main steam supplied to the steam turbine (9).

3. The power generation system (100) according to claim 1 or claim 2, arranged such that a value of a time interval of an instruction request from the turbine control section (57) to the load sharing control section (53) is set as a value suitable for operation states of the power turbine (7) and the steam turbine (9).

4. The power generation system (100) according to claim 3, arranged such that the value of the time interval of the instruction request from the turbine control section (57) to the load sharing control section (53) is set to be smaller when the power turbine (7) is started or shut down, or when the amount of steam from a low pressure steam source (71) is increased or decreased than during normal operation.

5. The power generation system (100) according to claim 4, arranged such that the value of the time interval of the instruction request from the turbine control section (57) to the load sharing control section (53) is set to be smaller when the power turbine (7) is started compared with when the power turbine (7) is shut down, and when the amount of steam from the low pressure steam source (71) is increased compared with when the amount of steam from the low pressure steam source (71) is decreased than during normal operation.

6. The power generation system (100) according to any one of claims 3 to 5, arranged such that relationships between output change rates of the power turbine (7) and the low pressure steam source (71), and the time interval of the instruction request are obtained in advance, and the time interval of the instruction request optimal to the output change rates to be calculated is obtained.

7. A control method of a power generation system (100) comprising the steps of:
driving a power turbine (7) by an exhaust gas generated by a main engine (3);
driving a steam turbine (9) by steam generated by the exhaust gas of the main engine (3);
generating power by driving of the power turbine (7) and the steam turbine (9);
controlling an output of the steam turbine (9); and
performing an increase instruction request for increasing an available power of power generation due to driving of the power turbine (7) and the steam turbine (9) when the power turbine (7) is started or performing a decrease instruction request for decreasing the available power of power generation due to driving of the power turbine (7) and the steam turbine (9) when the power turbine (7) is shut down, the available power of power generation being an upper limit value of the output of the power turbine (7) and the output of the steam turbine (9).

## Patentansprüche

1. Leistungserzeugungssystem (100), umfassend:
eine Leistungsturbine (7), die derart eingerichtet ist, dass sie von Abgas angetrieben wird, das von einer Hauptmaschine (3) erzeugt wird;
eine Dampfturbine (9), die derart eingerichtet ist, dass sie von Dampf angetrieben wird, der vom Abgas der Hauptmaschine (3) erzeugt wird;
einen Generator (25), der mit der Leistungsturbine (7) und der Dampfturbine (9) verbunden ist;
einen Turbinensteuerabschnitt (57), der derart eingerichtet ist, dass er eine Ausgabe der Dampfturbine (9) steuert; und
einen Lastverteilungssteuerabschnitt (53), der derart eingerichtet ist, dass er Lastverteilung einer Ausgabe der Leistungsturbine (7) und der Ausgabe der Dampfturbine (9) steuert,
wobei das Leistungserzeugungssystem (100) derart eingerichtet ist, dass, wenn die Leistungsturbine (7) hochgefahren wird, eine Erhöhungsinstruktionsanforderung zum Erhöhen einer verfügbaren Leistung des Generators (25) durchgeführt wird, oder derart, dass, wenn die Leistungsturbine (7) heruntergefahren wird, eine Verringerungsinstruktionsanforderung zum Verringern der verfügbaren Leistung des Generators (25) durchgeführt wird, wobei die verfügbare Leistung des Generators (25) ein oberer Grenzwert der Ausgabe der Leistungsturbine (7) und der Ausgabe der Dampfturbine (9) ist.

2. Leistungserzeugungssystem (100) nach Anspruch 1, das derart eingerichtet ist, dass eine Instruktion, die gemäß der Erhöhungsinstruktionsanforderung oder der Verringerungsinstruktionsanforderung an den Turbinensteuerabschnitt (57) ausgegeben wird, als ein Öffnungsgrad eines Reglerventils (37) gesteuert wird, das derart eingerichtet ist, dass es die Menge an Hauptdampf, die der Dampfturbine (9) zugeführt wird, reguliert.

3. Leistungserzeugungssystem (100) nach Anspruch 1 oder Anspruch 2, das derart eingerichtet ist, dass ein Wert eines Zeitintervalls einer Instruktionsanforderung vom Turbinensteuerabschnitt (57) an den Lastverteilungssteuerabschnitt (53) als ein Wert eingestellt wird, der für Betriebszustände der Leistungsturbine (7) und der Dampfturbine (9) geeignet ist.

4. Leistungserzeugungssystem (100) nach Anspruch 3, das derart eingerichtet ist, dass der Wert des Zeitintervalls der Instruktionsanforderung vom Turbinensteuerabschnitt (57) an den Lastverteilungssteuerabschnitt (53) so eingestellt wird, dass er kleiner ist als im Normalbetrieb, wenn die Leistungsturbine (7) hochgefahren oder heruntergefahren wird, oder wenn die Dampfmenge aus einer Niederdruckdampfquelle (71) erhöht oder verringert wird.

5. Leistungserzeugungssystem (100) nach Anspruch 4, das derart eingerichtet ist, dass der Wert des Zeitintervalls der Instruktionsanforderung vom Turbinensteuerabschnitt (57) an den Lastverteilungssteuerabschnitt (53) so eingestellt wird, dass er kleiner ist als im Normalbetrieb, wenn die Leistungsturbine (7) hochgefahren wird, verglichen mit wenn die Leistungsturbine (7) heruntergefahren wird, und wenn die Dampfmenge aus der Niederdruckdampfquelle (71) erhöht wird, verglichen mit wenn die Dampfmenge aus der Niederdruckdampfquelle (71) verringert wird.

6. Leistungserzeugungssystem (100) nach einem der Ansprüche 3 bis 5, das derart eingerichtet ist, dass Beziehungen zwischen Ausgabeänderungsraten der Leistungsturbine (7) und der Niederdruckdampfquelle (71) und dem Zeitintervall der Instruktionsanforderung im Voraus erhalten werden, und das Zeitintervall der Instruktionsanforderung, das für die Ausgabeänderungsraten, die berechnet werden sollen, optimal ist, erhalten wird.

7. Steuerverfahren eines Leistungserzeugungssystems (100), umfassend die Schritte des:
Antreibens einer Leistungsturbine (7) durch ein Abgas, das von einer Hauptmaschine (3) erzeugt wird;
Antreibens einer Dampfturbine (9) durch Dampf, der vom Abgas der Hauptmaschine (3) erzeugt wird;
Erzeugens von Leistung durch Antreiben der Leistungsturbine (7) und der Dampfturbine (9);
Steuerns einer Ausgabe der Dampfturbine (9); und
Durchführens einer Erhöhungsinstruktionsanforderung zum Erhöhen einer Leistungserzeugungsleistung, die infolge des Antreibens der Leistungsturbine (7) und der Dampfturbine (9) verfügbar ist, wenn die Leistungsturbine (7) hochgefahren wird, oder Durchführens einer Verringerungsinstruktionsanforderung zum Verringern der Leistungserzeugungsleistung, die infolge des Antreibens der Leistungsturbine (7) und der Dampfturbine (9) verfügbar ist, wenn die Leistungsturbine (7) heruntergefahren wird, wobei die verfügbare Leistungserzeugungsleistung ein oberer Grenzwert der Ausgabe der Leistungsturbine (7) und der Ausgabe der Dampfturbine (9) ist.

## Revendications

1. Système de génération de puissance (100) comprenant :
une turbine de puissance (7) conçue pour être entraînée par un gaz d'échappement généré par un moteur principal (3) ;
une turbine à vapeur (9) conçue pour être entraînée par de la vapeur générée par le gaz d'échappement du moteur principal (3) ;
un générateur (25) qui est relié à la turbine de puissance (7) et à la turbine à vapeur(9);
une section de commande de turbine (57) conçue pour commander une sortie de la turbine à vapeur (9) ; et
une section de commande de partage de charge (53) conçue pour commander un partage de charge d'une sortie de la turbine de puissance (7) et de la sortie de la turbine à vapeur (9),
le système de génération de puissance (100) étant conçu de telle sorte que, lorsque la turbine de puissance (7) est mise en marche, une requête d'instruction d'augmentation pour augmenter une puissance disponible du générateur (25) est effectuée ou de telle sorte que, lorsque la turbine de puissance (7) est arrêtée, une requête d'instruction de réduction pour réduire la puissance disponible du générateur (25) est effectuée, la puissance disponible du générateur (25) étant une valeur limite supérieure de la sortie de la turbine de puissance (7) et de la sortie de la turbine à vapeur (9).

2. Système de génération de puissance (100) selon la revendication 1, conçu de telle manière qu'une instruction qui est délivrée en sortie à la section de commande de turbine (57) en fonction de la requête d'instruction d'augmentation ou de la requête d'instruction de réduction est commandée en tant qu'un degré d'ouverture d'une soupape régulatrice (37) qui est conçue pour réguler la quantité de vapeur principale fournie à la turbine à vapeur (9).

3. Système de génération de puissance (100) selon la revendication 1 ou la revendication 2, conçu de telle manière qu'une valeur d'un intervalle de temps d'une requête d'instruction en provenance de la section de commande de turbine (57) vers la section de commande de partage de charge (53) est établie en tant que valeur appropriée pour des états de fonctionnement de la turbine de puissance (7) et de la turbine à vapeur (9).

4. Système de génération de puissance (100) selon la revendication 3, conçu de telle manière que la valeur de l'intervalle de temps de la requête d'instruction en provenance de la section de commande de turbine (57) vers la section de commande de partage de charge (53) est établie de sorte à être inférieure lorsque la turbine de puissance (7) est mise en marche ou arrêtée, ou lorsque la quantité de vapeur provenant d'une source de vapeur à basse pression (71) est augmentée ou réduite, que lors du fonctionnement normal.

5. Système de génération de puissance (100) selon la revendication 4, conçu de telle sorte que la valeur de l'intervalle de temps de la requête d'instruction en provenance de la section de commande de turbine (57) vers la section de commande de partage de charge (53) est établie de sorte à être plus petite lorsque la turbine de puissance (7) est mise en marche comparativement à lorsque la turbine de puissance (7) est arrêtée, et lorsque la quantité de vapeur en provenance de la source de vapeur à basse pression (71) est augmentée comparativement à lorsque la quantité de vapeur en provenance de la source de vapeur à basse pression (71) est réduite, que lors du fonctionnement normal.

6. Système de génération de puissance (100) selon l'une quelconque des revendications 3 à 5, conçu de telle sorte que les relations entre les taux de modification de sortie de la turbine de puissance (7) et de la source de vapeur à basse pression (71), et l'intervalle de temps de la requête d'instruction, sont obtenues en avance, et l'intervalle de temps de la requête d'instruction optimal pour les taux de modification de sortie à calculer est obtenu.

7. Procédé de commande d'un système de génération de puissance (100), comprenant les étapes :
d'entraînement d'une turbine de puissance (7) par un gaz d'échappement généré par un moteur principal (3) ;
d'entraînement d'une turbine à vapeur (9) par de la vapeur générée par le gaz d'échappement du moteur principal (3) ;
de génération de puissance par l'entraînement de la turbine de puissance (7) et de la turbine à vapeur (9) ;
de commande d'une sortie de la turbine à vapeur (9) ; et
d'exécution d'une requête d'instruction d'augmentation pour augmenter une puissance disponible de la génération de puissance sous l'effet de l'entraînement de la turbine de puissance (7) et de la turbine à vapeur (9) lorsque la turbine de puissance (7) est mise en marche ou l'exécution d'une requête d'instruction de réduction pour réduire la puissance disponible de la génération de puissance sous l'effet de l'entraînement de la turbine de puissance (7) et de la turbine à vapeur (9) lorsque la turbine de puissance (7) est arrêtée, la puissance disponible de la génération de puissance étant une valeur limite supérieure de la sortie de la turbine de puissance (7) et de la sortie de la turbine à vapeur (9).
